(19) Europäisches Patentamt
European Patent Office
Office européen des brevets

(11) EP 3 339 883 A1

(12) EUROPEAN PATENT APPLICATION

(43) Date of publication:
27.06.2018 Bulletin 2018/26

(51) Int Cl.:
G01S 7/41 (2006.01)     G01S 13/42 (2006.01)

(21) Application number: 17181036.9

(22) Date of filing: 12.07.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 22.12.2016 IN 201641043919

(71) Applicant: Airbus Defence and Space GmbH
82024 Taufkirchen (DE)

(72) Inventors:
• SANTRA, Avik
712258 Hooghly, West Bengal (IN)
• GANIS, Alexander Rudolf
80469 Munich (DE)
• PRECHTEL, Ulrich
81739 Munich (DE)
• ZIEGLER, Volker
85662 Hohenbrunn (DE)

(74) Representative: Isarpatent
Patent- und Rechtsanwälte Behnisch Barth
Charles
Hassa Peckmann & Partner mbB
Friedrichstrasse 31
80801 München (DE)

(54) A COGNITIVE RADAR SYSTEM

(57) A cognitive radar system (1) comprising an antenna array (2) having antennas and an antenna selection module (11) adapted to switch between horizontally polarized and vertically polarized transmit antennas of said antenna array (2) to transmit radar pulses based on a measured target Signal to Interference plus Noise Ratio, SINR, of radar pulses received by horizontally polarized and vertically polarized receive antennas of said antenna array (2).

Fig. 1

**Description**

The invention relates to a cognitive radar system and in particular to a cognitive MIMO radar system comprising a multiple input multiple output, MIMO, antenna array.

The field of electronics has fueled a surge in environment-aware matched illumination techniques including cognitive radar systems. A cognitive radar system can learn about the environment through experience gained from interactions with the environment and can continually update its receiver with relevant information on the environment. The transmitter of the cognitive radar system can adjust its illumination of the environment in a dynamic closed feedback loop encompassing the transmitter, the environment and the receiver.

It is an object of the present invention to provide a cognitive radar system allowing to detect targets comprising a low radar cross section.

This object is achieved according to a first aspect by a cognitive radar system comprising the features of claim 1.

The invention provides according to the first aspect of the present invention a cognitive radar system comprising an antenna array having antennas and an antenna selection module adapted to switch between horizontally polarized and vertically polarized transmit antennas of said antenna array to transmit radar pulses based on a measured target Signal to Interference plus Noise Ratio, SINR, of radar pulses received by horizontally polarized and vertically polarized receive antennas of said antenna array.

In a possible embodiment of the cognitive radar system according to the first aspect of the present invention, the antenna array comprises at least one transmit antenna adapted to transmit horizontally polarized radar pulses,

at least one transmit antenna adapted to transmit vertically polarized radar pulses, at least one receive antenna adapted to receive horizontally polarized radar pulses and

at least one receive antenna adapted to receive vertically polarized radar pulses.

In a possible embodiment of the cognitive radar system according to the first aspect of the present invention, the system comprises a measuring unit adapted to measure the target SINR of the radar pulses received by the horizontally and vertically polarized receive antennas of said antenna array and to supply the measured target SINR to the antenna selection module of said cognitive radar system.

In a possible embodiment of the cognitive radar system according to the first aspect of the present invention, the antenna selection module controls an antenna switching unit configured to switch between a transmit antenna adapted to transmit horizontally polarized radar pulses and a transmit antenna adapted to transmit vertically polarized radar pulses depending on the measured target SINR.

In a further possible embodiment of the cognitive radar system according to the first aspect of the present invention, the transmit antennas of said antenna array are adapted to transmit radar frames each comprising a predetermined number, $N_{frame}$, of symbols including a number, $N_H$, of symbols with horizontally polarized radar pulses and a number, $N_V$, of symbols with vertically polarized radar pulses.

In a further possible embodiment of the cognitive radar system according to the first aspect of the present invention, the antenna array is a multiple input multiple output, MIMO, antenna array comprising a number of horizontally polarized antennas and a number of vertically polarized antennas.

In a further possible embodiment of the cognitive radar system according to the first aspect of the present invention, each radar frame of a radar signal transmitted by a transmit antenna comprises an interrogating frame, I, or a cognitive frame, C.

In a possible embodiment of the cognitive radar system according to the first aspect of the present invention, the interrogating frame, I, is a non-adaptive frame with an equal distribution of horizontally polarized radar pulses and vertically polarized radar pulses transmitted by a transmit antenna of said antenna array in an interrogating phase.

In a further possible embodiment of the cognitive radar system according to the first aspect of the present invention, the cognitive frame, C, is an adaptive frame where a distribution of horizontally polarized radar pulses and vertically polarized radar pulses is adapted depending on the measured target SINR and is transmitted by a transmit antenna of said antenna array in a cognitive phase.

In a further possible embodiment of the cognitive radar system according to the first aspect of the present invention, the measuring unit of said cognitive radar system is adapted to measure a vertical target SINR ($SINR_{VV}$) based on vertically polarized radar pulses and a horizontal target SINR ($SINR_{HH}$) based on horizontally polarized radar pulses.

In a further possible embodiment of the cognitive radar system according to the first aspect of the present invention, the system further comprises a processing unit configured to calculate a ratio, s, of the vertical target SINR ($SINR_{VV}$) and the horizontal target SINR ($SINR_{HH}$).

In a further possible embodiment of the cognitive radar system according to the first aspect of the present invention, the number, $N_V$, of symbols with vertically polarized radar pulses transmitted within a cognitive frame, C, is:

$$N_V = round\left(\frac{s*(N_{max}-N_{min})+N_{min}}{1+s}\right)$$

wherein

N_max is the maximum number of symbols with a particular polarization to be transmitted in a radar frame and
N_min is the minimum number of symbols with a particular polarization to be transmitted in a radar frame and
s is the ratio calculated by the processing unit of said cognitive radar system.

The invention further provides according to a second aspect a method for detecting a target comprising the steps of claim 13.

The invention provides according to the second aspect a method for detecting a target,
the method comprising:

transmitting radar pulses by transmit antennas of an antenna array; and
switching between horizontally polarized and vertically polarized transmit antennas of said antenna array based on a measured target signal to interference plus noise ratio, SINR, of radar pulses received by horizontally polarized and by vertically polarized receive antennas of said antenna array.

In a possible embodiment of the method for detecting a target according to the second aspect of the present invention the transmit antennas transmit radar frames which include a predetermined number, $N_{frame}$, of symbols including a number, $N_H$, of symbols with horizontally polarized radar pulses and a number, $N_v$, of symbols with vertically polarized radar pulses.

In a possible embodiment of the method according to the second aspect of the present invention, each radar frame of a radar signal transmitted by a transmit antenna comprises an interrogating frame, I, or a cognitive frame, C.

In a possible embodiment of the method according to the second aspect of the present invention, the interrogating frame, I, is a non-adaptive frame with an equal distribution of horizontally polarized radar pulses and vertically polarized radar pulses transmitted by a transmit antenna in an interrogating phase.

In a further possible embodiment of the method according to the second aspect of the present invention, the cognitive frame, C, is an adaptive frame where a distribution of horizontally polarized radar pulses and vertically polarized radar pulses is adapted depending on the measured target SINR and is transmitted by a transmit antenna in a cognitive phase.

In the following, possible embodiments of the different aspects of the present invention are described in more details with reference to the enclosed figures.

Fig. 1          shows a block diagram of a possible exemplary embodiment of a cognitive radar system according to the first aspect of the present invention;

Fig. 2          shows a schematic diagram for illustrating an interrogating radar frame used by the cognitive radar system according to the present invention in an interrogating phase;

Fig. 3          shows a further schematic diagram for illustrating a cognitive radar frame used by the cognitive radar system according to the present invention in a cognitive phase;

Fig. 4          shows a schematic diagram illustrating a sequence of interrogating and cognitive frames transmitted by a cognitive radar system to illustrate its operation;

Fig. 5          shows a flowchart of a possible exemplary embodiment of a method for detecting a target according to a further aspect of the present invention;

Figs. 6A, 6B    are diagrams for illustrating the operation of the apparatus and method according to the present invention;

Fig. 7          shows a diagram for illustrating targets of different sizes which can be tracked and/or detected by a cognitive radar system according to the present invention.

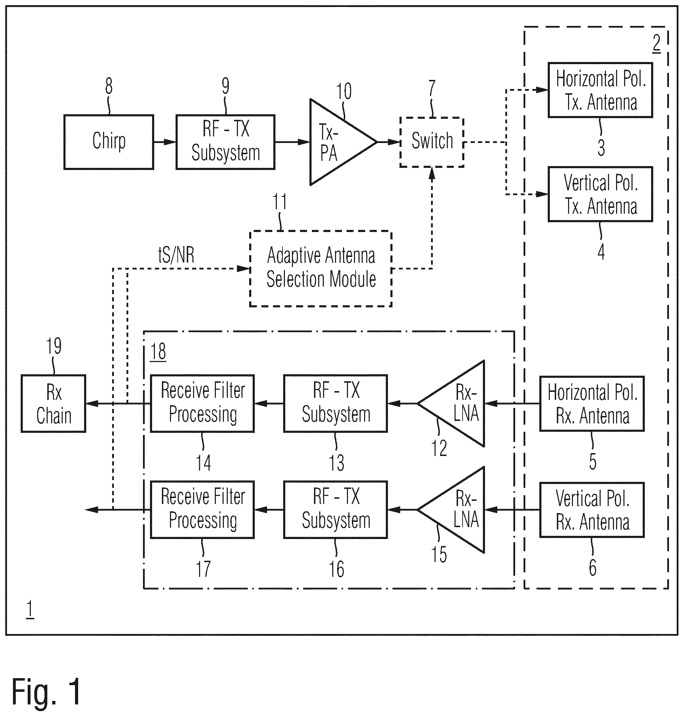

Fig. 1 shows a block diagram of a possible exemplary embodiment of a cognitive radar system 1 according to the first aspect of the present invention. The cognitive radar system 1 comprises in the illustrated embodiment an antenna array 2. The antenna array 2 comprises in the illustrated embodiment at least one transmit antenna 3 adapted to transmit horizontally polarized radar pulses, H, and at least one transmit antenna 4 adapted to transmit vertically polarized radar pulses, V. Besides the transmit antennas 3, 4, the antenna array 2 further comprises receive antennas 5, 6. In the illustrated embodiment, the antenna array 2 comprises at least one receive antenna 5 adapted to receive horizontally polarized radar pulses, H. The antenna array 2 comprises in the illustrated embodiment further at least one receive antenna 6 adapted to receive vertically polarized radar pulses, V. In a possible implementation, the antenna array 2 can be a multiple input multiple output, MIMO, antenna array comprising a predetermined number of horizontally polarized antennas and a predetermined number of vertically polarized antennas. The number of antennas within the antenna array 2 can vary depending on the application.

Polarization refers to the shape of a curve traced by a tip of the electric field vector as a function of time at a point in space. To achieve polarization, one can use an antenna that is designed to transmit and receive electromagnetic waves of a specific polarization. The antennas within the antenna array 2 can comprise different types. Possible embodiments of polarization antennas include horns, waveguides, dipoles and patches. In a possible implementation, the antenna can be configured such that it is matched to the same polarization on reception when the electromagnetic wave is incident upon the respective antenna.

In a further possible embodiment comprising a more complex antenna array, the antenna may be designed to transmit and receive electromagnetic waves at more than one polarization. On transmit, electromagnetic waves of different polarizations can be transmitted separately using a switch to direct energy to the different parts, i.e. the H polarized parts and the V polarized parts of the respective antenna in sequence.

Because a scatterer can change a polarization of the scattered wave to be different from the polarization of the incident wave, a radar antenna of the antenna array 2 can be designed to receive the different polarization signal components of the electromagnetic wave simultaneously. For example, the H parts and V parts of an antenna can receive the two orthogonal signal components of the incoming radar wave as electronics of the system may keep these two signals separate.

Denoting the transmit and the receive polarizations by a pair of symbols, the cognitive radar system 1 using H and V linear polarization can comprise the following channels:

> HH for horizontal transmit and horizontal receive,
> VV for vertical transmit and vertical receive,
> HV for horizontal transmit and vertical receive and
> VH for vertical transmit and horizontal receive.

The first two of the above indicated polarization combinations HH, VV can be referred as to like-polarized, because the polarizations of the transmit and receive signals are the same. The last two combinations HV, VH of the above four combinations can be referred to as cross-polarized, because the polarizations of the transmit and receive signals are orthogonal to one another.

A radar system may have different levels of polarization complexity. A quadrature-polarized, i.e. a polarimetric radar system, can use four polarizations (HH, VV, HV and VH) and measure a phase difference between the channels as well as their magnitudes. Dual-polarized radar systems can measure the phase difference between channels as this phase may play a role in polarimetric information extraction.

The cognitive radar system 1 in the illustrated architecture of Fig. 1 comprises a single TX RF channel with a switching unit 7 configured to switch between horizontally polarized antennas 3 and vertically polarized antennas 4 of the antenna array 2. In the illustrated embodiment of Fig. 1, a chirp signal generation unit 8 supplies a chirp signal to an RF TX subsystem 9 and a transmitter power amplifier 10 whose output signal is applied through the switching unit 7 to the horizontally polarized transmission antennas 3 or the vertically polarized transmission antennas 4 of the antenna array 2.

The radar cross section RCS is a measure indicating how detectable a target object is with a radar system. A larger RCS indicates that a target can be more easily detected. A target can reflect a limited amount of radar energy back to the signal source. The factors that influence this can include the material of which the target is made, an absolute size of the respective target, a relative size of the target in relation to the wavelength of the illuminating radar, an incident angle, a reflected angle as well as the polarization of a transmitted and received radiation in respect to the orientation of the respective target. The horizontally polarized target RCS can be substantially different from the vertically polarized target RCS. The cognitive radar system 1 according to the present invention makes use of this fact to detect in particular small RCS targets even when operating in complex and dense clutter scenarios.

The cognitive radar system 1 comprises in the illustrated embodiment of Fig. 1 an antenna selection module 11 which is adapted to control the switching unit 7. The antenna selection module 11 is adapted to control a switching between horizontally polarized and vertically polarized transmit antennas 3, 4 of said antenna array 2 to transmit radar pulses based on a measured target signal to interference plus noise ratio, SINR, of radar pulses received by horizontally polarized and vertically polarized receive antennas 5, 6 of the antenna array 2. The signal to interference plus noise ratio SINR depends on the power P of the incoming signal of interest, the interference power I of other interfering signals and a noise N of the respective channel or environment. In the illustrated embodiment of Fig. 1, the cognitive radar system 1 comprises different signal paths for the horizontal polarization receive antennas 5 and the vertical polarization receive antennas 6. A first receive signal path for a radar signal received by the horizontal polarization receive antennas 5 comprises a receive (Rx) low noise amplifier (LNA) 12, RF-Rx subsystems 13 and a receive filter processing unit 14. The second receiver signal path for the radar signals received by the vertical polarization reception antennas 6 comprises a reception low noise amplifier 15, RF-Rx subsystems 16 and a receive filter processing unit 17 as illustrated in Fig. 1. A measuring unit 18 including both reception signal paths is adapted to measure a target SINR of the radar pulses received by the horizontally polarized receive antennas 5 and the vertically polarized receive antennas 6 of the antenna array 2 and to supply the measured target SINR to the antenna selection module 11 of the cognitive radar system 1 as illustrated in Fig. 1. The received radar signals can be further processed in a receive signal processing chain 19 as shown in Fig. 1. The antenna selection module 11 controls an antenna switching unit 7 to switch between transmit antennas 3 adapted to transmit horizontally polarized radar pulses and transmit antennas 4 adapted to transmit vertically polarized radar pulses depending on the target SINR. The antenna array 2 shown in Fig. 1 is in a possible embodiment a multiple input multiple output, MIMO, antenna array comprising several horizontally polarized antennas 3, 5 and several vertically polarized antennas 4, 6.

The transmit antennas 3, 4 are adapted to transmit radar frames wherein each radar frame comprises a predetermined number, $N_{frame}$, of symbols including a number, $N_H$, of symbols with horizontally polarized radar pulses and a number, $N_V$, of symbols with vertically polarized radar pulses. Each radar frame of a radar signal transmitted by a transmit antenna can be formed by an interrogating frame, I, or by a cognitive frame, C. In a possible embodiment of the adaptive or cognitive radar system 1 illustrated in Fig. 1, the system operates in two operation phases. A first operation phase comprises an interrogating or non-adaptive phase. A second operation phase comprises a cognitive adaptive phase.

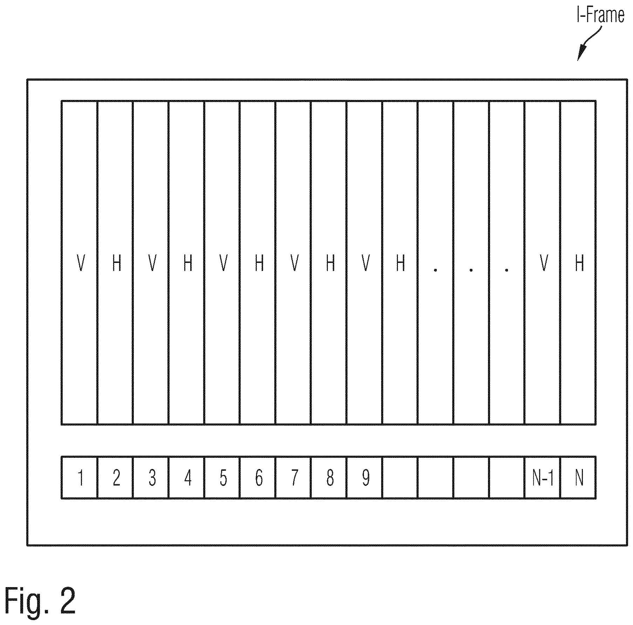

In the interrogating or non-adaptive phase, interrogating radar frames, I, are transmitted by the transmit antennas 3, 4. The interrogating frame, I, is a non-adaptive frame with an equal distribution of horizontally polarized radar pulses and vertically polarized radar pulses transmitted by the transmit antennas 3, 4 of the antenna array 2 in the interrogating phase. A possible implementation of an interrogating frame is illustrated in Fig. 2. In the interrogating phase, there is an equal distribution of horizontally polarized radar pulses, H, and vertically polarized radar pulses, V, in the respective interrogating frame. The interrogating frame, I, is used to measure the received target SINR from horizontally polarized, vertically polarized and cross-polarized reception. The received RCS parameters can be fed into the antenna selection module 11 which decides the proportion of horizontally polarized radar pulses**???**, H, and vertically polarized radar pulses, V, in the next adaptive cognitive frame, C, based on an optimizing function.

Fig. 2 shows an interrogating frame, I, with a predetermined number, $N_{frame}$, of radar symbols. In the illustrated embodiment, the number of vertical radar symbols, $N_V$, and the number of horizontal symbols, $N_H$, is equal wherein:

$$(N_V = N_H = N_{frame}/2)$$

$N_V$, $N_H$ are the number of symbols transmitted through the vertically and horizontally polarized transmit antennas 3, 4 respectively, wherein $N_{frame}$ indicates the number of symbols that constitutes a radar frame.

In the illustrated embodiment of Fig. 2, the horizontal and vertical symbols H, V are transmitted in an alternating sequence.

Based on the estimated target SINR response on the horizontally polarized and vertically polarized receive antennas 5, 6, the adaptive antenna selection module 11 then based on optimal selection criteria provides a distribution of horizontally polarized and vertically polarized symbols/pulses in a radar frame for the adaptive cognitive phase. An underlying rationale of the adaptive antenna selection is to use more horizontally polarized symbols H if the background clutter is predominantly reflecting on the vertically polarized transmissions and vice versa. The cognitive radar system 1 switches through effective resource scheduling between horizontally polarized and vertically polarized antennas 3, 4 to transmit its radar pulses based on the target received SINR from the horizontal and vertical polarized receive antennas 5, 6. The cognitive radar system 1 is adapted to transmit through horizontally polarized transmit antennas 3 if the received SINR from the same is higher compared to that from the vertically polarized transmit antenna to exploit a SINR gain. If after the transmission of a radar frame the response from vertically polarized antennas gets stronger, it is possible to explore this occurrence and a balance or trade-off in the proportionating horizontal and vertical pulses H, V within the radar frame can be maintained. It is possible to keep probing the radar target scene in case that a change of the target aspect angle or clutters orientation results in another polarization to have a better response than can be assessed in the interrogation phase.

In the cognition phase, the estimates from one radar frame can be used in the subsequent radar frame to enable higher received SINR and thus detection. It is also possible to adapt the distribution of the symbols in response to changes in the radar signal response between frames.

In a possible embodiment, the measuring unit 18 is adapted to measure a vertical target SINR ($SINR_{VV}$) based on vertically polarized radar pulses and a horizontal target SINR ($SINR_{HH}$) based on horizontally polarized radar pulses. A processing unit can calculate a ratio, s, of the measured vertical target SINR ($SINR_{VV}$) and the horizontal target SINR ($SINR_{HH}$):

$$s = \frac{SINR_{VV}}{SINR_{HH}}$$

In a possible embodiment, the number, $N_V$, of symbols with vertically polarized radar pulses transmitted within a cognitive frame, C, is given as follows:

$$N_V = round\left(\frac{s*(N_{max}-N_{min})+N_{min}}{1+s}\right)$$

wherein

$N_{max}$ is the maximum number of symbols with a particular polarization to be transmitted in a radar frame

and

$N_{min}$ is the minimum number of symbols with a particular polarization to be transmitted in a radar frame and

s is the ratio calculated by the processing unit of the cognitive radar system 1.

The number, $N_H$, of symbols with horizontally polarized radar pulses can be calculated as follows:

$$N_H = N_{frame} - N_V$$

The number of pulses in a frame ($N_{max}$ and $N_{min}$) can be chosen so as to provide a trade-off between exploitation and exploration. The trade-off between exploitation (enhanced target RCS response from one of the polarized waveform) and exploration (keeping probing the target in case the aspect change of the target has resulted in another polarization to have a better response) can be achieved by this.

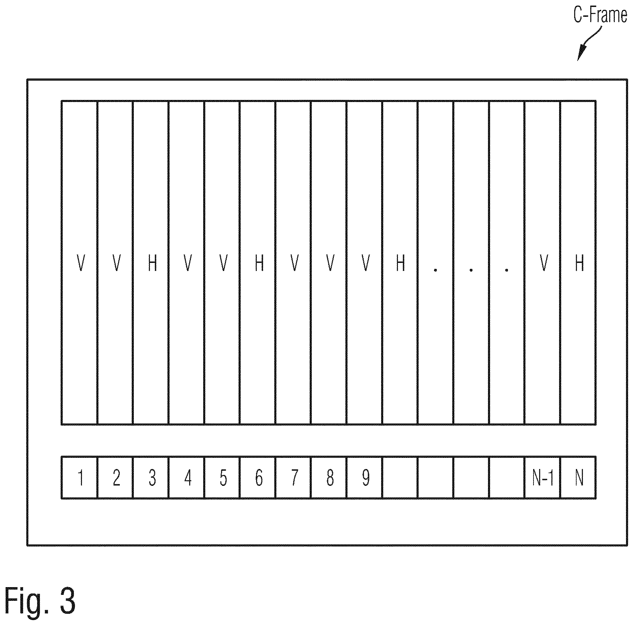

Based on a target RCS response on the horizontally polarized and vertically polarized receive antennas of the antenna array 2 and the corresponding clutter responses, a scheme can for example propose a distribution of horizontally polarized and vertically polarized pulses in the adaptive cognitive frame as illustrated in Fig. 3. Fig. 3 shows an example of a cognitive frame C including symbols with horizontally polarized pulses, H and symbols with vertically polarized pulses, V. In the illustrated example of Fig. 3, the number of vertically polarized symbols $N_V$ exceeds the number of horizontally polarized symbols $N_H$.

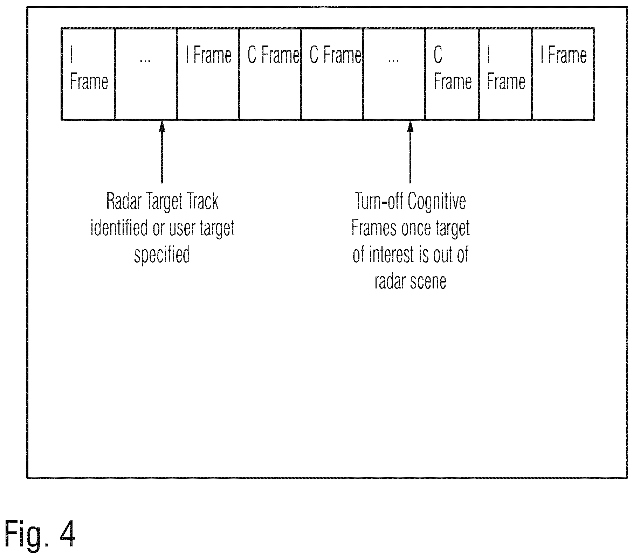

Fig. 4 shows an exemplary cycle of interrogating frames, I, and cognitive frames, C, transmitted by the cognitive radar system 1 during operation. As illustrated, after a target of interest has been identified or specified by a user, the cognitive frames C can be transmitted after a small time delay. Once the target of interest is out of the radar scene of the cognitive radar system 1, cognitive radar frames, C, can be turned off to transmit interrogating frames, I, with a short time delay as illustrated in Fig. 4. Fig. 4 illustrates interrogating and cognitive frames during radar target tracking.

In a multi-target radar scenario, the target of interest or target SINR can be estimated by different methods. First, it is possible for a user to choose a particular target track on which the adaption can be based upon. Further, one can use a target with the lowest VV-RCS/HH-RCS ratio. Alternatively, it is possible to use the mean of the lowest targets VV-RCS/HH-RCS ratio. Finally, it is possible to use the mean of all targets VV-RCS/HH-RCS ratios.

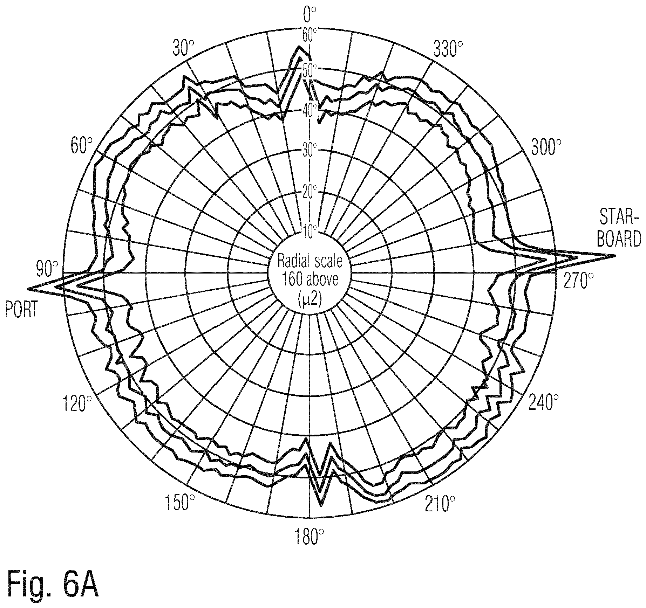

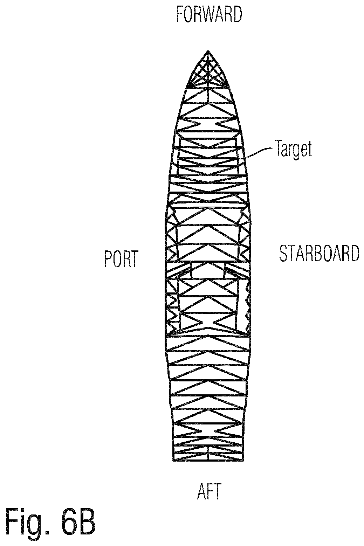

Fig. 6A shows a VV, HH, VH RCS plots for a target such as a ship as illustrated in Fig. 6B with different aspect angles. The difference in the RCS parameters can be exploited in an adaptive or cognitive manner to facilitate detection of small RCS targets even in complex dense clutter environments or backgrounds.

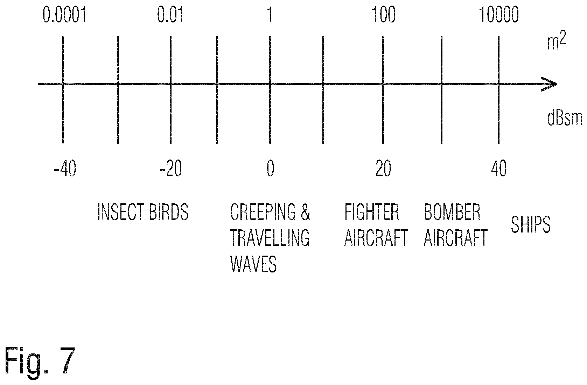

Fig. 7 indicates the RCS values of different target objects having different sizes. A fundamental equation for the RCS of an electrically large object having a perfectly reflecting surface of area A when viewed directly by a radar base signal $\sigma \approx \dfrac{4\pi A^2}{\lambda^2}$, wherein A is the wavelength of the radar signal.

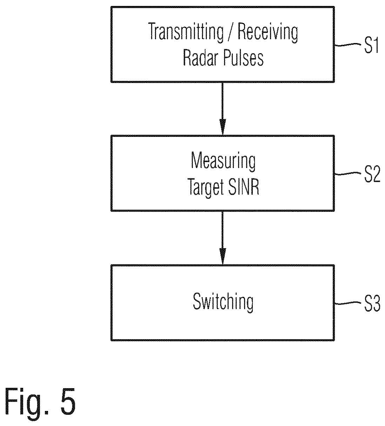

Fig. 5 shows a flowchart of a possible exemplary embodiment of a method for detecting a target according to a further aspect of the present invention.

In a first step S1, radar pulses are transmitted and received by antennas of an antenna array.

In a further step, the target signal to interference plus noise ratio, SINR, of radar pulses received by horizontally polarized and by vertically polarized receive antennas of the antenna array is measured.

The horizontally polarized and vertically polarized transmit antennas of the antenna array are then switched in step S3 based on the measured target signal to interference plus noise ratio, SINR.

The steps illustrated in Fig. 5 can be performed continuously during operation of the cognitive radar system 1.

The cognitive radar system 1 according to the present invention is adapted to adaptively select transmit antennas (either horizontally polarized or vertically polarized) to enable detection of low RCS targets and targets operating in a complex radar background such as a ship in a turbulent sea or low RCS targets with high electromagnetic interference or interference from communication signals. The method and system according to the present invention has applications in multiple input multiple input, MIMO, radar systems and any other kinds of active sensing systems such as sonar systems and can be used for enhanced detection, tracking and imaging of targets. The method and apparatus according to the present invention enhances the recognition capability of the system sensing its operating environment based on its parameter estimation and feedback. In a possible embodiment, the method and apparatus uses antenna selection criteria to determine a distribution of the horizontally polarized symbols H and the vertically polarized symbols V in the transmitted radar frames. The system 1 enables detection of low RCS targets in a high clutter background as well as detection of other targets in complex clutter environments such as EMI/EMC interferences. The selective transmission across transmit antennas 3, 4 with different polarization enhances the recognition capabilities of the cognitive radar system 1 and allows it to operate even under complex radar scenarios.

The cognitive radar system 1 can be used to detect and/or track any kind of targets including vehicles, ships and/or flying objects. In a possible embodiment, the cognitive radar system 1 can be a cognitive radar system located on ground. In an alternative embodiment, the cognitive radar system 1 can be implemented into a mobile object such as a vehicle, ship or plane to detect and/or track targets in the vicinity of the respective object.

REFERENCE SIGNS

1 cognitive radar system
2 antenna array
3 horizontal polarized transmission antennas
4 vertical polarized transmission antennas
5 horizontal polarized reception antennas
6 vertical polarized reception antennas
7 switching unit
8 chirp signal generation unit
9 RF-TX subsystem
10 TX power amplifier
11 antenna selection module
12 reception low noise amplifier
13 RF-Rx subsystem
14 receive filter processing unit
15 Rx low noise amplifier
16 RF-Rx subsystem
17 receive filter processing unit
18 measuring unit
19 Rx radar signal processing chain

**Claims**

1. A cognitive radar system (1) comprising:

   - an antenna array (2) having antennas (3, 4, 5, 6) and
   - an antenna selection module (11) adapted to switch between horizontally polarized and vertically polarized transmit antennas (3, 4) of said antenna array (2) to transmit radar pulses based on a measured target Signal to Interference plus Noise Ratio, SINR, of radar pulses received by horizontally polarized and vertically polarized receive antennas (5, 6) of said antenna array (2).

2. The cognitive radar system according to claim 1 wherein said antenna array (2) comprises
   at least one transmit antenna (3) adapted to transmit horizontally polarized radar pulses,
   at least one transmit antenna (4) adapted to transmit vertically polarized radar pulses,
   at least one receive antenna (5) adapted to receive horizontally polarized radar pulses and
   at least one receive antenna (6) adapted to receive vertically polarized radar pulses.

3. The cognitive radar system according to claim 1 or 2 comprising:

   a measuring unit (18) adapted to measure the target SINR of the radar pulses received by the horizontally and vertically polarized receive antennas (5, 6) of said antenna array (2) and to supply the measured target SINR to the antenna selection module (11) of said cognitive radar system (1).

4. The cognitive radar system according to any of the preceding claims 1 to 3 wherein said antenna selection module (11) controls an antenna switching unit (7) configured to switch between a transmit antenna (3) adapted to transmit horizontally polarized radar pulses and a transmit antenna (4) adapted to transmit vertically polarized radar pulses depending on the measured target SINR.

5. The cognitive radar system according to any of the preceding claims 1 to 4 wherein the transmit antennas (3) are adapted to transmit radar frames each comprising a predetermined number, $N_{frame}$, of symbols including a number, $N_H$, of symbols with horizontally polarized radar pulses and a number, $N_V$, of symbols with vertically polarized radar pulses.

6. The cognitive radar system according to any of the preceding claims 1 to 5 wherein said antenna array (2) is a multiple input multiple output, MIMO, antenna array comprising a number of horizontally polarized antennas and a number of vertically polarized antennas.

7. The cognitive radar system according to claim 5 wherein each radar frame of a radar signal transmitted by a transmit antenna (3, 4) comprises an interrogating frame, I, or a cognitive frame, C.

8. The cognitive radar system according to claim 7 wherein the interrogating frame, I, is a non-adaptive frame with an equal distribution of horizontally polarized pulses, H, and vertically polarized pulses, V, transmitted by a transmit antenna (3, 4) of said antenna array (2) in an interrogating phase.

9. The cognitive radar system according to claim 7 or 8 wherein the cognitive frame, C, is an adaptive frame where a distribution of horizontally polarized radar pulses, H, and vertically polarized radar pulses, V, is adapted depending on the measured target SINR and is transmitted by a transmit antenna (3, 4) of said antenna array (2) in a cognitive phase.

10. The cognitive radar system according to any of the preceding claims 1 to 9 wherein the measuring unit (18) is adapted to measure a vertical target SINR ($SINR_{VV}$) based on vertically polarized radar pulses and a horizontal target SINR ($SINR_{HH}$) based on horizontally polarized radar pulses.

**11.** The cognitive radar system according to claim 10 wherein a processing unit is configured to calculate a ratio, s, of the vertical target SINR ($SINR_{VV}$) and the horizontal target SINR ($SINR_{HH}$).

**12.** The cognitive radar system according to claim 11 wherein the number, $N_V$, of symbols with vertically polarized radar pulses transmitted within a cognitive frame, C, is:

$$N_V = round\left(\frac{s*(N_{max}-N_{min})+N_{min}}{1+s}\right)$$

wherein

$N_{max}$ is the maximum number of symbols with a particular polarization to be transmitted in a radar frame and
$N_{min}$ is the minimum number of symbols with a particular polarization to be transmitted in a radar frame and
s is the ratio calculated by said processing unit.

**13.** A method for detecting a target, the method comprising:

- transmitting (S1) radar pulses by transmit antennas of an antenna array; and
- switching (S2) between horizontally polarized and vertically polarized transmit antennas of said antenna array based on a measured signal to interference plus noise ratio, SINR, of radar pulses received by horizontally polarized and by vertically polarized receive antennas of said antenna array.

**14.** The method according to claim 13 wherein the transmit antennas transmit radar frames which include a predetermined number, $N_{frame}$, of symbols including a number, $N_H$, of symbols with horizontally polarized radar pulses and a number, $N_V$, of symbols with vertically polarized radar pulses,
wherein each radar frame of a radar signal transmitted by a transmit antenna comprises an interrogating frame, I, or a cognitive frame, C,
wherein the interrogating frame, I, is a non-adaptive frame with an equal distribution of horizontally polarized pulses and vertically polarized pulses transmitted by a transmit antenna in an interrogating phase,
wherein the cognitive frame, C, is an adaptive frame where a distribution of horizontally polarized radar pulses and vertically polarized radar pulses is adapted depending on the measured target SINR and is transmitted by a transmit antenna in a cognitive phase.

Fig. 1

I-Frame

| V | H | V | H | V | H | V | H | V | H | . | . | . | V | H |

| 1 | 2 | 3 | 4 | 5 | 6 | 7 | 8 | 9 | | | | | N-1 | N |

Fig. 2

Fig. 3

| I Frame | ... | I Frame | C Frame | C Frame | ... | C Frame | I Frame | I Frame |

Radar Target Track identified or user target specified

Turn-off Cognitive Frames once target of interest is out of radar scene

# Fig. 4

Fig. 5

Fig. 6A

Fig. 6B

Fig. 7

Europäisches
Patentamt
European
Patent Office
Office européen
des brevets

**EUROPEAN SEARCH REPORT**

Application Number

EP 17 18 1036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG J ET AL: "Adaptive polarimetry design for a target in compound-Gaussian clutter", SIGNAL PROCESSING, ELSEVIER SCIENCE PUBLISHERS B.V. AMSTERDAM, NL, vol. 89, no. 6, 1 June 2009 (2009-06-01), pages 1061-1069, XP025991792, ISSN: 0165-1684, DOI: 10.1016/J.SIGPRO.2008.12.018 [retrieved on 2009-01-03] * sec. 1 and 2 * | 1-14 | INV. G01S7/41 G01S13/42 |
| A | GOGINENI S ET AL: "Polarimetric MIMO Radar With Distributed Antennas for Target Detection", IEEE TRANSACTIONS ON SIGNAL PROCESSING, IEEE SERVICE CENTER, NEW YORK, NY, US, vol. 58, no. 3, 1 March 2010 (2010-03-01), pages 1689-1697, XP011297261, ISSN: 1053-587X * abstract * | 1-14 | |
| A | CN 103 439 699 B (UNIV XIDIAN) 27 May 2015 (2015-05-27) * abstract * | 1-14 | TECHNICAL FIELDS SEARCHED (IPC) G01S |
| A | XIANG ZHE ET AL: "Target discrimination method with polarimetric radar", 2016 CIE INTERNATIONAL CONFERENCE ON RADAR (RADAR), IEEE, 10 October 2016 (2016-10-10), pages 1-4, XP033161863, DOI: 10.1109/RADAR.2016.8059510 [retrieved on 2017-10-04] * sec. I and II; figure 1 * | 1-14 | |

-/--

The present search report has been drawn up for all claims

| Place of search | Date of completion of the search | Examiner |
|---|---|---|
| Munich | 2 March 2018 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 17 18 1036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SANDEEP GOGINENI ET AL: "Game theoretic design for polarimetric MIMO radar target detection", SIGNAL PROCESSING, ELSEVIER SCIENCE PUBLISHERS B.V. AMSTERDAM, NL, vol. 92, no. 5, 24 November 2011 (2011-11-24), pages 1281-1289, XP028435136, ISSN: 0165-1684, DOI: 10.1016/J.SIGPRO.2011.11.024 [retrieved on 2011-12-06] * abstract * | 1-14 | |
| A | GUI-MEI ZHENG ET AL: "Transmitted Polarization Optimization for DOA Estimation Based on Vector Sensor MIMO Radar", JOURNAL OF ELECTRONICS & INFORMATION TECHNOLOGY, vol. 36, no. 3, 1 March 2014 (2014-03-01), pages 565-570, XP055455907, DOI: 10.3724/SP.J.1146.2013.00648 * abstract * | 1-14 | |
| A | GB 944 098 A (HOLLANDSE SIGNAALAPPARATEN BV) 11 December 1963 (1963-12-11) * page 2, column 1, line 18 - page 2, column 1, line 42 * | 1-14 | TECHNICAL FIELDS SEARCHED (IPC) |

-/--

The present search report has been drawn up for all claims

| Place of search | Date of completion of the search | Examiner |
|---|---|---|
| Munich | 2 March 2018 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 17 18 1036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Joseph R Guerci: "Home Cognitive Radar: The Next Radar Wave?", Microwave Journal, 10 January 2011 (2011-01-10), XP055146490, Retrieved from the Internet: URL:http://www.microwavejournal.com/articl es/10487-cognitive-radar-the-next-radar-wa ve?v=preview [retrieved on 2014-10-14] * page 6 - page 6 * ----- | 1-14 | |
| A | TAO R ET AL: "A New SINR Equation Based on the Polarization Ellipse Parameters", IEEE TRANSACTIONS ON ANTENNAS AND PROPAGATION, IEEE SERVICE CENTER, PISCATAWAY, NJ, US, vol. 53, no. 4, 1 April 2005 (2005-04-01), pages 1571-1577, XP011130003, ISSN: 0018-926X, DOI: 10.1109/TAP.2005.844397 * the whole document * ----- | 1,3, 10-12 | |
| L | XIANG ZHE ET AL: "Transmitter polarization optimization with polarimetric MIMO radar for mainlobe interference suppression", DIGITAL SIGNAL PROCESSING, ACADEMIC PRESS, ORLANDO,FL, US, vol. 65, 4 March 2017 (2017-03-04), pages 19-26, XP029979997, ISSN: 1051-2004, DOI: 10.1016/J.DSP.2017.02.012 * sec. 1 * ----- | 1-14 | TECHNICAL FIELDS SEARCHED (IPC) |

The present search report has been drawn up for all claims

| Place of search | Date of completion of the search | Examiner |
|---|---|---|
| Munich | 2 March 2018 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 18 1036

This annex lists the patent family members relating to the patent documents cited in  the above-mentioned European search report.
The members are as contained in the European Patent Office EDP file on
The European Patent Office is in no way liable for these particulars which are merely given for the purpose of information.

02-03-2018

| Patent document cited in search report | | Publication date | Patent family member(s) | | Publication date |
|---|---|---|---|---|---|
| CN 103439699 | B | 27-05-2015 | NONE | | |
| GB 944098 | A | 11-12-1963 | BE | 589090 A | 26-09-1960 |
| | | | CH | 377890 A | 31-05-1964 |
| | | | DE | 1158593 B | 05-12-1963 |
| | | | GB | 944098 A | 11-12-1963 |

EPO FORM P0459

For more details about this annex : see Official Journal of the European Patent Office, No. 12/82